(19) Europäisches Patentamt
European Patent Office
Office européen des brevets

(11) Publication number: **0 091 612**
**B1**

(12) **EUROPEAN PATENT SPECIFICATION**

(45) Date of publication of patent specification: **02.12.87**

(51) Int. Cl.$^4$: **C 08 L 23/04**, C 08 K 5/09, C 08 K 5/15

(21) Application number: **83103178.6**

(22) Date of filing: **30.03.83**

(54) **High clarity enthylene polymer compositions.**

(30) Priority: **31.03.82 US 363824**

(43) Date of publication of application:
**19.10.83 Bulletin 83/42**

(45) Publication of the grant of the patent:
**02.12.87 Bulletin 87/49**

(84) Designated Contracting States:
**DE FR GB IT NL SE**

(56) References cited:
**FR-A-2 281 950**

**PATENTS ABSTRACTS OF JAPAN, vol. 3, no. 91(C-54), 3rd August 1979, page 89C54**

(73) Proprietor: **UNION CARBIDE CORPORATION**
**39 Old Ridgebury Road**
**Danbury Connecticut 06817 (US)**

(72) Inventor: **Cieloszyk, Gary Stanley**
**30 Lisa Terrace**
**Somerville New Jersey 08876 (US)**

(74) Representative: **Barz, Peter, Dr. et al**
**Patentanwälte Dr. V. Schmied-Kowarzik Dipl.-Ing. G. Dannenberg Dr. P. Weinhold Dr. D. Gudel Dipl.-Ing. S. Schubert Dr. P. Barz**
**Siegfriedstrasse 8**
**D-8000 München 40 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 091 612 B1**

## Description

This invention relates to ethylene polymer plastic compositions useful for producing extruded or molded polyethylene products having improved transparency.

Polyolefin resins such as polyethylene have been used for a number of years for the preparation of products such as packaging materials and containers in the form of films, sheets or molded articles.

Unlike high-pressure low-density polyethylene, where the optical properties are governed primarily by rheological factors, the optical properties of narrow molecular weight distribution ethylene polymers are controlled primarily by crystallization effects, i.e., spherulite size. Heterogenous nucleating additives can improve ethylene polymers opticals by increasing the nucleation rate and hence the overall rate of crystallization, thereby generating smaller spherulites.

Heretofore extremely pure dibenzylidene sorbitol (DBS) has been used as a nucleating agent to improve the optical properties of polyethylene products.

Thus, according to US—A—4,016,118, there is provided a polyolefin plastic composition having improved transparency and reduced molding shrinkage, which consists essentially of at least one polymer or copolymer of an aliphatic monoolefin and dibenzylidene sorbitol, the proportion of the dibenzylidene sorbitol being 0.1 to 0.7% by weight, based on the total weight of the composition.

However, under some fabrication operations and conditions, even high levels of DBS may not improve the transparency (reduced haze) of Ziegler type catalyzed linear low density polyethylene (LLDPE) since a critical concentration is required. Moreover, even in the case where DBS is effective, high concentrations are required. Since DBS is an expensive material, reduction of the concentrations needed to produce desired results is of commercial significance.

Moreover, the use of DBS to enhance the optical properties of LLDPE is not entirely satisfactory from a practical commercial standpoint since the effectiveness of DBS as a nucleating agent can be seriously impaired in the presence of the catalyst residues and/or by-products generated during the LLDPE resin-forming process or during the fabrication of the desired product.

Optical properties of extruded films produced from Ziegler-Natta catalyzed resins containing antioxidants can be improved with the addition of an acid acceptor to prevent surface distortions known as pin striping and gel streaking. The surface distortions are produced as a result of adverse interactions between catalyst residues and/or by-products, antioxidants and the resin.

Treatments disclosed in the prior art involve the addition of compounds to the polymer prior to fabrication in order to complex with the harmful components in the catalyst residue and deactivate them. Illustrative of these prior art treatments are those disclosed in CA—A—961,998, US—A—4,013,622 and in 3,773,743. For example, US—A—3,773,732 discloses a method for improving the stability and color of olefin polymers by deactivating their Ziegler-Natta catalyst residues. This method involves high temperature (190°C—250°C) processing with hydroxyl compounds ($H_2O$ and primary alcohols) and with an organic base such as an alkyl amine; aryl amine; Li, Ca and Zn salts of carboxylic acids; trialkyl phosphites; and metal alkoxides. The concentration disclosed for the hydroxy source is in the range of 0.5 to 1.5 weight percent and a concentration of 50 to 2500 parts per million (ppm) is disclosed for the organic base. At the processing temperatures disclosed, some of the organic bases and the hydroxy sources would be volatile and cause foaming of the product if the processing were not done in a way to remove volatiles.

However, as mentioned previously, in processing LLDPE resins, clarity in the final product is determined by crystallization factors of the composition and hence control of the formation of pinstripes and/or other surface defects (gel streaking) by the above prior art methods is independent and fundamentally different from the techniques described herein.

Furthermore, JP—A—54/69155 discloses polypropylene compositions whose transparency is improved by adding thereto 0.03 to 1 weight percent of dibenzylidene sorbitol and 0.01 to 0.5 weight percent of a metal salt such as sodium, potassium, calcium stearates and adipates, having an average particle diameter of not more than 100 µm.

An object of the present invention is to provide an ethylene polymer composition comprising a Ziegler-type catalyzed ethylene polymer, and extruded films and molded articles fabricated from such compositions which have excellent transparency with reduced haze.

Another object of the present invention is to generate improvement of opticals e.g., lower haze, at lower concentrations of DBS than those normally required for ethylene polymer plastic forming compositions.

A still further object of the present invention is an ethylene polymer plastic composition comprising LLDPE, DBS and zinc stearate, which composition is eminently suitable for forming films or molded articles having a high degree of clarity.

This invention is based on the discovery that the beneficial effects of DBS in improving the optical properties of ethylene polymer compositions can be maintained during processing through the addition of relatively small amounts of zinc stearate to the ethylene polymer-DBS composition prior to forming the finished article. As a result of the invention, the finished products, produced from said compositions whether they be in the form of film or molded articles, have a relatively high degree of clarity.

In addition it has been discovered that the utilization of zinc stearate in relatively small amounts

reduces the critical level of DBS normally required in ethylene polymer compositions to improve the clarity of the finished products produced from said compositions.

In one aspect, the present invention relates to an ethylene polymer plastic composition which, when molded or extruded, forms a film or article having good clarity. Said composition comprises an ethylene polymer resin and dibenzylidene sorbitol in an amount of from 0.09 to 0.35% by weight, based on the total weight of the composition, which is characterized in that said ethylene polymer resin has a narrow molecular weight distribution, an ethylene content of ≧85% and a melt flow ratio of ≧22 to ≦40 and that, additionally, zinc stearate is present in amounts of from 0.04 to 0.35% by weight, based on the total weight of the composition. The ethylene polymer resin contains residues from a Ziegler-type catalyst used in its preparation.

In still another aspect, the present invention relates to a method of maintaining and enhancing the effectiveness of DBS when said DBS is utilized to enhance the optical properties of ethylene polymer forming compositions which method comprises incorporating in said plastic-forming compositions to enhance the optical properties of ethylene polymer plastic compositions, which comprises incorporating in said plastic-forming compositions containing dibenzylidene sorbitol in an amount of 0.09 to 0.35% by weight, based on the total weight of the composition, zinc stearate in an amount of 0.04 to 0.35% by weight, based on the total weight of the composition.

The DBS can be added to the ethylene polymer and mixed by any suitable mixing means.

The zinc stearate can be uniformly dispersed in the ethylene based extrusion composition. The dispersion can be effected by various dispersion techniques commonly employed by those skilled in the art of preparing extrudable compositions. The zinc stearate can be introduced into the ethylene polymer containing DBS or along with DBS either by directly dry blending with ethylene polymer via a V-type blender or by mixing via a Henschel type intensive mixer. The zinc stearate and DBS can also be hot compounded directly into the ethylene polymer or into a base polymer to make a masterbatch for the final letdown using conventional hot processing equipment such as a Banbury mixer, a Werner Pfleiderer twin screw mixing extruder or a single screw mixer extruder that has pelletization equipment on the head of the extruder.

The dibenzylidene sorbitol (DBS) is a white powder having a melting point of 210° to 212°C which is obtained by reacting 1 mole of d-sorbitol and 2 moles of benzaldehyde in the presence of an acid catalyst at an elevated temperature. It includes an isomer of the formula

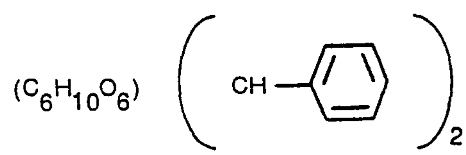

and is typically expressed by the following structural formula

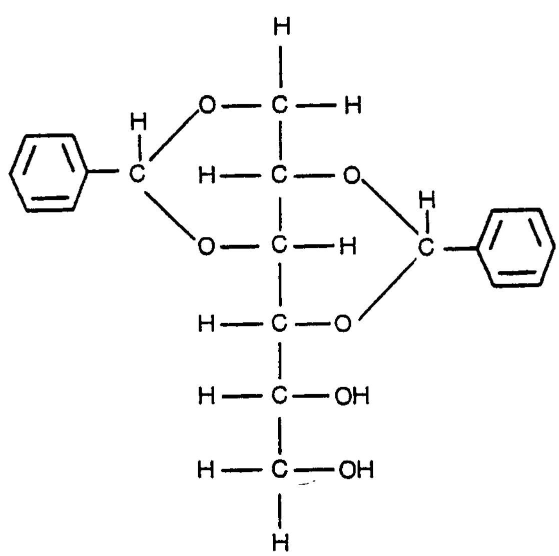

The dibenzylidene sorbitol obtained by the above method contains about 2% of by-product monobenzylidene sorbitol and tribenzylidene sorbitol. Although it is not always necessary to remove these impurities, the product is preferably purified so that the purity of the dibenzylidene sorbitol becomes 99.0 to 99.5% or more. The purification can be performed by recrystallization from dimethyl formamide.

The dibenzylidene sorbitol is also commercially available.

The proportion of the dibenzylidene sorbitol required in the composition of this invention is variable and depends upon such factors as intrinsic resin properties, temperatures experienced during processing, fabrication conditions and the amount of stearate compound used in the composition.

The proportion of the dibenzylidene sorbitol in the composition of this invention is 0.09% to 0.35% by weight, preferably 0.12% to 0.25% by weight, based on the total weight of the composition. Although amounts of dibenzylidene sorbitol in excess of 0.35% by weight could be used, since the compound is expensive, the increased costs far outweigh any advantages.

The zinc stearate is commercially available readily obtainable from a wide variety of sources.

The proportion of zinc stearate compound in the composition of this invention is 0.04% to 0.35% by weight, preferably 0.06% to 0.25% of weight, based on the total weight of the composition.

Ethylene Polymers

The copolymers used in the compositions of the present invention are hydrocarbon copolymers of a major mol percentage (≧85%) of ethylene, and a minor mol percentage (≦15%) of one or more $C_3$ to $C_8$ alpha olefins. The $C_3$ to $C_8$ alpha olefins should not contain any branching on any of their carbon atoms which is closer than the fourth carbon atom. The preferred $C_3$ to $C_8$ alpha olefins are propylene, butene-1, pentene-1, hexene-1 and octene-1.

The ethylene polymers have a melt flow ratio of ≧22 to ≦40 and preferably of ≧25 to ≦33. The melt flow ratio value is another means of indicating the molecular weight distribution of a polymer. The melt flow ratio (MFR) range of ≧25 to ≦33 thus corresponds to a Mw/Mn value range of about 2.7 to 4.1. The polymers herein include a Mw/Mn value of the range of about 2.2 to 4.5. The melt index ranges from 0.1 to 100 g/10 min.

The homopolymers have a density of ≧0.960 to ≦0.972 and preferably of ≧0.961 to ≦0.968.

The copolymers have a density of ≧0.910 to ≦0.960 and preferably ≧0.917 to ≦0.955, and most preferably, of ≧0.917 to ≦0.945. The density of the copolymer, at a given melt index level for the copolymer, is primarily regulated by the amount of the $C_3$ to $C_8$ comonomer which is copolymerized with the ethylene. In the absence of the comonomer, the ethylene would homopolymerize with a catalyst to provide homopolymers having a density of about ≧0.96. Thus, the addition of progressively larger amounts of the comonomers to the copolymers results in a progressive lowering of the density of the copolymer. The amount of each of the various $C_3$ to $C_8$ comonomers needed to achieve the same result will vary from monomer to monomer, under the same reaction conditions.

The ethylene polymers used in the compositions of the present invention have an unsaturated group content of ≦1, and usually ≧0.1 to ≦0.35, C = C/1000 carbon atoms. They are useful for mixing films and molded articles.

Also included in the term polymer are blends of one polymer with one or more other polymers. Illustrative of such blends are ethylene/olefin polymers mixed with one or more of the following: polypropylene, high pressure low-density polyethylene, high density polyethylene, polybutene-1, and polar monomer containing olefin copolymers such as for example, ethylene/acrylic acid copolymers, ethylene/methyl acrylate copolymer, ethylene/ethylacrylate copolymer, ethylene/vinyl acetate copolymer, ethylene/acrylic acid/ethyl acrylate terpolymer and ethylene/acrylic acid/vinyl acetate terpolymer.

Preferred low pressure, low density ethylene copolymers for use in the present invention include those which may be produced in accordance with the procedures set forth in EP—A—4646 and 4647 as well as procedures which will produce ethylene hydrocarbon copolymers with properties as heretofore described.

Other low pressure, low density ethylene polymers preferred for use in the present invention are those which may be prepared as described in US—A—4,011,382.

The ethylene polymers may be used in the form of powders, pellets, granules, or any other form that can be fed to an extruder.

Extrudable Compositions

The extrudable compositions of the invention may be used in any of the forms of such compositions which are commonly employed in the extruded film arts, such as compounds modified with various slip and anti-block additives for specific end use applications.

These extrudable compositions are thermoplastic in nature. In addition to the ethylene polymer, DBS and stearate compound, the compositions of the present invention may contain other adjuvant materials which are commonly employed in ethylene polymer-based extrudable compositions. Such other adjuvants would include plasticizers, fillers, pigments, lubricants, slip agents, antioxidants, stabilizers, modifiers and similar materials.

The fillers which may be used in the ethylene polymer-based extrudable compositions of the present invention are the fillers which are commonly used with such polymers. The fillers are used in amounts which correspond to 0.1 to 20 percent by weight, based on the weight of the olefin polymer. Such fillers would include materials such as clays, diatomaceous earth, calcium silicates and others known in the art.

The plasticizers which may be employed in the ethylene polymer-based extrudable compositions of the present invention are the plasticizers which are commonly used with such polymers. The plasticizers

are used in amounts which would correspond to 1 to 25 percent weight based on the weight of ethylene polymer. Such plasticizers would include materials such as phthalates, phosphates, adipates, azelates, amine based polyols, and a number of other similar products.

The lubricants which are commonly employed in the ethylene polymer-based extrudable compositions are the lubricants which are commonly used with such polymers. The lubricants are used in amounts which correspond to 0.01 to 0.2 percent by weight of lubricant agent, based on the weight of the ethylene polymer. Examples of such lubricants are fatty acid amides such as stearamide, oleamide, behenamide and erucamide.

Extruding Conditions

Film

The films produced by the compositions of the present invention may be extruded by tubular blown film extrusion such as disclosed in US—A—4,243,619. In the patent process a molten, narrow molecular weight distribution ethylene hydrocarbon copolymer is extruded through an annular die having a die gap of greater than 1.27 mm (50 mils) to less than 3.05 mm (120 mils), preferably greater than 1.27 mm (50 mils) to less than 2.54 mm (100 mils). The copolymer is extruded at a temperature of 163 to 260°C (325 to 500°F), and is extruded in an upward vertical direction in the form of a tube although it can be extruded downward or even sideways. After extrusion of the molten polymer through the annular die, the tubular film is expanded to the desired extent, cooled, or allowed to cool and flattened. The tubular film is flattened by passing the film through a collapsing frame and a set of nip rolls. These nip rolls are driven, thereby providing means for withdrawing the tubular film away from the annular die.

A positive pressure of gas, for example, air or nitrogen, is maintained inside the tubular bubble. As is known in the operation of conventional film processes, the pressure of the gas is controlled to give the desired degree of expansion of the tubular film. The degree of expansion, as measured by the ratio of the fully expanded tube circumference to the circumference of the die annulus, is in the range 1/1 to 6/1 and, preferably, 1/1 to 4/1.

As the ethylene hydrocarbon copolymer exits the annular die, the extrudate cools and its temperature falls below its melting point and it solidifies. The optical properties of the extrudate change as crystallization occurs and a frost line is formed. The position of this frost line above the annular die is a measure of the cooling rate of the copolymer film. This cooling rate has a very marked effect on the optical properties of the ethylene hydrocarbon copolymer film produced herein.

Crystallization effects, as discussed previously, dominate the optical properties of the ethylene polymer films described herein. Blown film process parameters have a very pronounced effect on the optical properties of these films.

The films produced by the composition of the present invention are usually prepared in tubing or sheeting which are 0.0025 to 0.25 mm (0.1 to 10 mils) thick.

Molded Articles

The articles produced from the composition of the present invention are prepared by methods well known in the art, such as by injection molding, rotomolding and blow molding.

Articles such as lids, closures, food or garbage containers, dishpans and toys are produced by ram or screw injection molding processes well known in the art. For example, Renfrew & Morgan, "Polyetylene", second edition, Interscience Publisher, (1960) pages 549—570 describes injection molding of polyethylene. The articles of the present invention are molded in a standard injection molding machine where the ethylene polymer is heated at a temperature of from 180° to 270°C in the machine until plasticized and is then injected at a pressure of from 3.6 to 13.9 MPa (500 to 2000 psig) into a mold cavity of desired configuration. The ethylene polymer is cooled in the mold cavity at temperatures of from 15° to 60°C until it conforms to the shape of the mold cavity. The molded article is then removed from the mold.

Articles such as bottles and containers are molded by injection or extrusion blow molding processes which are well known in the prior art. For example, Renfrew & Morgan, supra, pages 571 to 579, described blow molding of polyethylene. In blow molding, the ethylene polymer is heated as previously described in the machine and the resin is then injected into a mold cavity kept at a temperature near the melting point of the resin preferably from about 80° to 130°C, and formed into a tubular shape called a parison which is then transferred to another cooler mold of desired shape and forced under air pressure against the walls of the mold cavity and cooled. The article is then removed from the mold.

Extrusion blow molding consists of, for example, extruding a length of tube of the ethylene polymer into a split mold which is then closed to seal the tube at either top or bottom. The tube is then inflated to the internal contour of the mold, for example, by air pressure introduced into the extrudate. The molding is then cooled, the mold opened and the component ejected.

Articles such as large toys and industrial size food and garbage containers are principally made by rotomolding instead of injection molding, because of the intricate shapes involved and the superior economics the process offers for low volume production.

The process of rotomolding is well known in the art and is described in "Encyclopedia of Polymer Science and Technology", Volume 9, Interscience Publisher, 1968, pages 118—137.

In this process either powdered resin or fine resin particles are placed into the metal mold cavity which

is then rotated in a hot oven at 260 to 316°C (500 to 600°F) until the resin melts and coats the inside of the mold cavity. The metal mold containing the molten resin is then transferred to a cooling means wherein it is cooled until the molten resin has solidified and conformed to the shape of the mold cavity.

Before processing according to the methods heretofore described, the ethylene polymer can be mixed or blended with various additives and then added to the molding machine or the ethylene polymer can be added directly to the molding machine together with any additives.

The shape of molded articles from ethylene polymer include, for example, lids, closures, food and garbage containers, dishpans, bottles, toys and hinges.

Properties of Ethylene Polymers, Films and Articles

The properties of the ethylene polymers, film and articles produced therefrom, were determined by the following methods:

| | |
|---|---|
| Density | ASTM D—1505 — Plaque is conditioned for one hour at 100°C to approach equilibrium crystallinity — reported as g/cm$^3$ |
| Melt Index (MI) | ASTM D—1238 — Condition E — measured at 190°C — reported as grams per 10 minutes. |
| Flow Index (HLMI) | ASTM D—1238 — Condition F measured at 10 times the weight used in the melt index test above — reported as grams per 10 minutes. |
| Melt Flow Ratio (MFR) | Flow Index/Melt Index. |
| Molecular Weight Distribution Mw/Mn | Gel Permeation Chromatography styragel column packaging, pore size packing sequence is $10^6$, $10^4$, $10^3$, $10^2$, 6 nm. solvent: Perchlorethylene at 117°C. Detection: Infrared at 3.45 µm. |
| Haze | ASTM D—1003—61 — Percentage of transmitted light scattered more than 2.5° from the normal incident beam. Reported as percent haze. |
| 45° Specular Gloss (Dull) | ASTM D—2457—70. Gloss measurements were made using a Gardner Model UX—6 glossmeter. 45° specular gloss is the relative luminous fractional reflectance of a film specimen where the incident beam is 45° off the normal and, the receptor is at the mirror reflection of the axis of the incident beam. |

The following examples are illustrative of the present invention.

I. *Preparation of Polymer Resins*

A. Three low pressure, low density ethylene-butene-1 copolymer resins were prepared according to the procedure disclosed in SA—A—79—01365. The properties of the ethylene-butene-1 copolymer resins were determined by methods disclosed previously.

One of the ethylene-butene-1 copolymer resins, designated (1), had the following properties: a melt index of 1.0; a MFR of 26; a density of 0.918 g/cm$^3$; and a catalyst residue in ppm of Ti—2, Al—73, Si—56 and Cl—13.

The second ethylene-butene-1 copolymer resin, designated (2), had the following properties: a melt index of 2.0; a MFR of 28; a density of 0.918 g/cm$^3$; and a catalyst residue in ppm of Ti—3, Al—80, Si—97 and Cl—16.

The third ethylene-butene-1 copolymer resin (3) had the following properties: a melt index of 50; a MFR of 26; a density of 0.926 g/cm$^3$; and a catalyst residue in ppm of Ti—3, Al—89, Si—56 and Cl—13.

B. A low pressure high density ethylene homopolymer resin designated as (4) was prepared according to the procedure disclosed in US—A—4,303,771. The properties of the homopolymers were determined by the methods described previously.

The homopolymer resin had the following properties: a melt index of 7; a MFR of 26; a density of 0.967 g/$cm^3$; and a catalyst residue in ppm of Ti—4, Al—60, Si—100, and Cl—45.

Resin A or resin B was used in the resin compositions of all the subsequent examples herein.

Examples 1 to 6 and Controls 1 to 12

An ethylene-butene-1 having a MI of 2 and a density of 0.918 g/$cm^3$ copolymer prepared as described above, and designated (2) was compounded using a small Brabender mixer with dibenzylidene sorbitol (DBS) and co-ingredients under a five minute mixing cycle at 150° and 210°C. All ingredients were simultaneously added and compounded in the 40 gram Brabender. The compounded products were subsequently compression molded into plaques (10 × 10 cm, 0.5 mm; 4" × 4", 20 mils) at 170, 190 and 220°C, respectively. The following formulations were investigated: ethylene-butene-1 copolymer plus 1400 ppm dibenzylidene sorbitol; ethylene-butene-1 copolymer plus 1400 ppm dibenzylidene sorbitol plus 3000 ppm diatomaceous earth; ethylene-butene-1 copolymer plus 1400 ppm dibenzylidene sorbitol plus 1400 ppm zinc stearate. The appearance and the haze of the plaques were recorded. The data is summarized in Table I.

As indicated in Table I, 1400 ppm DBS alone or in combination with 3000 ppm antiblock (diatomaceous earth) did not improve plaque clarity (lower haze) at the higher mixing and/or molding temperatures. With the addition of 1400 ppm zinc stearate (examples 1 to 6) high clarity, low haze plaques were produced under all mixing and molding conditions which were investigated.

TABLE I

| Example (E) Control (C) | Composition | $T_{Mix}$ (°C)[1] | $T_{mold}$ (°C)[2] | Appearance[3] | Haze (%) |
|---|---|---|---|---|---|
| C1 | Low density PE resin + | 150 | 170 | Hazy (partial) | 60.8 |
| C2 | 1400 ppm DBS | " | 190 | Hazy | 60.0 |
| C3 | | " | 220 | Hazy | 67.2 |
| C4 | Low density PE resin + | 210 | 170 | Hazy | 64.0 |
| C5 | 1400 ppm DBS | " | 190 | Hazy | 65.9 |
| C6 | | " | 220 | Hazy | 70.7 |
| C7 | Low density PE resin + | 150 | 170 | Clear | 33.7 |
| C8 | 1400 ppm DBS + | " | 190 | Hazy (partial) | 40.2 |
| C9 | 3000 ppm AB (antiblock) | " | 220 | Hazy (almost total) | 56.6 |
| C10 | Low density, PE resin | 210 | 170 | Hazy | 65.3 |
| C11 | 1400 ppm DBS + | " | 190 | Hazy | 66.9 |
| C12 | 3000 ppm AB (antiblock) | " | 220 | Hazy | 68.6 |
| E1 | Low density PE resin + | 150 | 170 | Clear | 34.0 |
| E2 | 1400 ppm DBS | " | 190 | Clear | 25.3 |
| E3 | + 1400 ppm zinc stearate | " | 220 | Clear | 22.2 |
| E4 | Low density PE resin + | 210 | 170 | Clear | 36.9 |
| E5 | 1400 ppm DBS | " | 190 | Clear | 31.7 |
| E6 | + 1400 ppm zinc stearate | " | 220 | Clear | 41.4 |

(1) Brabender mixing temperatures.
(2) Compression molding plaque temperatures.
(3) Based on 0.5 mm (20 mil) plaques.

Examples 7 and 8 and Controls 13 to 15

An ethylene butene-1 copolymer, prepared as described above, having a melt index of 2.0 grams/10 min. and density of 0.918 grams/cm$^3$ designated (2) and containing approximately 200 ppm of a storage stabilizer was dryblended with a masterbatch containing DBS or a masterbatch containing both DBS and zinc stearate. Both masterbatches were produced using a 2.7 kg (6.0 lb.) Banbury with 2.0 MI 0.918 density ethylene-butene-1 copolymer as the base masterbatch resin. The first masterbatch contained 4.0% DBS, while the second masterbatch contained 4.0 wt.% DBS and 2.8 wt.% zinc stearate. Dryblends of the base resin and granulated masterbatches were produced at 3.5 and 5.0% letdown, respectively. The dryblends were subsequently fabricated into tubular films using a 24:1 L/D, 3.8 cm (1½ inch) Sterling extruder fitted with a standard 24:1 L/D PE mixing screw. The die was a 7.6 cm (3 inch) Sano spiral pin configuration with an enlarged 1.5 mm (60 mil) die gap. Films were produced at an 20—23 cm (8—9 inch) frostline height at 50 RPM (11.3 kg/hr; 25 lbs/hr) at 0.038 mm (1.5 mil) gauge, 3:1 BUR from the standard ethylene-butene-1 copolymer (control) and blends with 3.5 and 5.0 wt% of the DBS and DBS plus zinc stearate masterbatches.

Table II illustrates the final composition and subsequent haze and 45° Dull gloss of the film. As illustrated in Controls 14 and 15, DBS by itself can have under certain conditions a detrimental or negligible effect on the film opticals of said ethylene-butene-1 copolymer film relative to Control 13.

Example 8 illustrates that a critical level of zinc stearate is required in combination with DBS to generate a dramatic improvement in the film opticals of said ethylene-butene-1 copolymer films.

TABLE II

| Example (E) Control (C) | Masterbatch (%) Letdown | FILM FORMULATION DBS (ppm) | Zinc Stearate (ppm) | Haze (%) | Gloss (45° Dull) |
|---|---|---|---|---|---|
| C13 | 0 | 0 | 0 | 16.2 | 39.4 |
| C14 | 3.5 | 1400 | 0 | 20.7 | 33.7 |
| E7 | 3.5 | 1400 | 980 | 16.2 | 40.9 |
| C15 | 5.0 | 2000 | 0 | 17.6 | 35.5 |
| E8 | 5.0 | 2000 | 1400 | 3.3 | 82.0 |

Examples 9 and 10 and Controls 16 to 18

An ethylene butene-1 copolymer prepared as described above, having a melt index of 1.0 grams/10 min. and a density of 0.918 g/cm$^3$ designated (1) and containing approximately 200 ppm of a storage stabilizer was dryblended with a masterbatch containing DBS or a masterbatch containing both DBS and zinc stearate. Both masterbatches were produced using a 2.7 kg (6.0 lb.) Banbury with a 2.0 MI, 0.918 density ethylene-butene-1 copolymer as the base masterbatch resin. The first masterbatch contained 4.0% DBS, while the second masterbatch contained 4.0 wt.% DBS and 2.8 wt.% zinc stearate. Dryblends of the base resin and granulated masterbatches were produced at 3.5 and 5.0% letdown, respectively. The dryblends were subsequently fabricated into tubular films using a 24:1 L/D, 3.8 cm (1½ inch) Sterling extruder fitted with a standard 24:1 L/D polyethylene mixing screw. The die was a 7.6 cm (3 inch) Sano spiral pin configuration with an enlarged 1.5 mm (60 mil) die gap. Films were produced at an 20—23 cm (8—9 inch) frostline height at 50 RPM (11.3 kg/hr; 25 lbs/hr) at 0.038 mm (1.5 mil) gauge, 3:1 BUR from the standard ethylene-butene-1 copolymer (control) and blends with 3.5 and 5.0 wt% of the DBS and DBS plus zinc stearate masterbatches.

Table III illustrates the final composition and subsequent haze and 45° Dull gloss of the film. As illustrated in Controls 17 and 18, DBS by itself can have under certain conditions a detrimental effect on the films opticals of said ethylene-butene-1 copolymer film relative to the Control 16.

Example 10 illustrates that a critical level of zinc stearate is required in combination with DBS to generate a dramatic improvement in the film opticals of said ethylene-butene-1 copolymer films.

TABLE III

| Example (E) Control (C) | Masterbatch (%) Letdown | FILM FORMULATION DBS (ppm) | Zinc Stearate (ppm) | Haze (%) | Gloss (45° Dull) |
|---|---|---|---|---|---|
| C16 | 0 | 0 | 0 | 9.7 | 59.2 |
| C17 | 3.5 | 1400 | 0 | 17.8 | 40.2 |
| E9 | 3.5 | 1400 | 980 | 14.9 | 44.0 |
| C18 | 5.0 | 2000 | 0 | 18.1 | 38.9 |
| E10 | 5.0 | 2000 | 1400 | 5.0 | 80.0 |

Controls 19 to 22

An ethylene-butene-1 copolymer having a MI of 2 and a density of 0.918 g/cm$^3$ designated (2) prepared as described above, was compounded using a small Brabender mixer with dibenzylidene sorbitol (DBS) and co-ingredients under a five minute mixing cycle at 150°C. The very low levels of DBS (30 ppm) were added via a masterbatch. All ingredients were then simultaneously compounded. The compounded products were subsequently compression molded into plaques (10 × 10 cm, 0.5 mm; 4 × 4 inch, 20 mils) at 150° and 220°C, respectively. The following formulations were investigated: ethylene-butene-1 copolymer with 30 ppm DBS, and ethylene butene-1 copolymer with 30 ppm DBS and 1400 ppm zinc stearate. The appearance and haze of the plaques were recorded. The data are summarized in Table IV and indicate that 1400 ppm of zinc stearate alone does not reduce the haze of compression molded low density plaques vis-a-vis a control (Controls 19, 20 vs. 21, 22).

TABLE IV

| Control (C) | Composition | $T_{mix}$ (°C) | $T_{mold}$ (°C) | Appearance | Haze (%) |
|---|---|---|---|---|---|
| C19 | Low density PE | 150 | 150 | hazy | 63.7 |
| C20 | + 30 ppm DBS | | 220 | hazy | 73.1 |
| C21 | Low density PE | 150 | 150 | hazy | 57.5 |
| C22 | + 30 ppm DBS + 1400 ppm zinc stearate | | 220 | hazy | 69.2 |

Examples 11 and 12 and Control 23

An ethylene butene-1, 50 MI, 0.926 density copolymer designated (3) prepared as described above, was compounded with dibenzylidene sorbitol (DBS) and co-ingredients using a Prodex compounding extruder. An unmodified control, also compounded under the same conditions served as the control. The formulations (see Table V) were then injection molded at 221°C (430°F) into 603 lid samples. The specimen thicknesses were approximately 0.69 to 0.76 mm (27—30 mils). The appearance and the haze of the lids were recorded. The data is summarized in Table V and indicates that DBS combined with zinc stearate dramatically reduces the haze, once a critical level of DBS is achieved. The critical concentration of DBS can be affected by fabrication conditions.

TABLE V

| Example (E) Control (C) | Composition | Appearance | Haze (%) |
|---|---|---|---|
| C23 | 50 MI low density PE | hazy | 94.1 |
| E11 | 50 MI low density PE + 1400 ppm DBS + 800 ppm zinc stearate | hazy | 92.7 |
| E12 | 50 MI low density PE + 1800 ppm DBS + 800 ppm zinc stearate | clear | 51.9 |

Examples 13 to 21 and Controls 24 to 32

A high density ethylene homopolymer at 0.967 density and 7 MI, MFR 25 designated as (4) was compounded using a small Brabender mixer with dibenzylidene sorbitol (DBS) and co-ingredients under a five minute mixing cycle at 170°, 190° and 220°C. All ingredients were simultaneously added and compounded in the 40 gram capacity Brabender. The compounded products were subsequently compression molded into plaques (10 × 10 cm × 0.5 mm; 4 × 4 in. × 20 mil) at 170°, 190° and 220°C, respectively. The following formulations were investigated: high density narrow molecular weight distribution ethylene homopolymer containing 2200 ppm DBS and a high-density narrow molecular weight distribution ethylene homopolymer containing 2200 ppm DBS and 1200 ppm zinc stearate. The appearance and the haze of the plaques were recorded. The data is summarized in Table VI.

As demonstrated in Table VI, 2200 ppm alone of DBS can under certain mixing and molding conditions generate clearer high density plaques (see Controls 25, 30) compared to a control without DBS. However, the incorporation of 1200 ppm zinc stearate with the 2200 ppm DBS generated clearer plaques under a greater set of mixing and molding conditions. (see Examples 14, 15, 16, 17 and 19).

TABLE VI

| Example (E) Control (C) | Composition | $T_{mix}$ (°C) | $T_{mold}$ (°C) | Plaque Appearance | Plaque Haze (%) |
|---|---|---|---|---|---|
| C24 | high density polyethylene + | 170 | 170 | almost clear | 64.4 |
| C25 | 2200 ppm DBS | " | 190 | clear | 60.6 |
| C26 | | " | 220 | almost clear | 64.1 |
| C27 | | 190 | 170 | almost clear | 63.6 |
| C28 | | " | 190 | hazy | 64.3 |
| C29 | | " | 220 | hazy | 65.6 |
| C30 | | 220 | 170 | clear | 59.7 |
| C31 | | " | 190 | hazy | 67.7 |
| C32 | | " | 220 | hazy | 71.6 |
| E13 | high density polyethylene + | 170 | 170 | almost clear | 62.6 |
| E14 | 2200 ppm DBS + | " | 190 | clear | 57.6 |
| E15 | 1200 ppm zinc stearate | " | 220 | clear | 57.8 |
| E16 | | 190 | 170 | almost clear | 63.3 |
| E17 | | " | 190 | clear | 57.4 |
| E18 | | " | 220 | clear | 60.0 |
| E19 | | 220 | 170 | clear | 61.8 |
| E20 | | " | 190 | hazy | 68.2 |
| E21 | | " | 220 | hazy | 69.5 |

Example 21 and Control 33

A Differential Scanning Calorimetry (DSC) crystallization time measurement was used to determine the magnitude of the reduction in the concentration of DBS required to produce improved clarity with the addition of zinc stearate to said ethylene polymer. The technique measures the time taken for a resin melt to reach maximum crystallization rate under a given degree of supercooling. Increasing the degree of supercooling decreases the crystallization time. If one tries to crystallize a polymer near its melting point (small degree of supercooling), the crystallization time becomes exceedingly long. Using the DSC, a small

specimen is heated at 10°/minute up to 150°C, held at that temperature (maximum DSC temperature) to ensure complete relaxation of any stress and then cooled at 160°C/min to the desired crystallization temperature. Since the DSC is a very sensitive calorimeter, it can precisely monitor the energy liberated during the crystallization process. The time taken to reach the maximum crystallization rate is designated the crystallization time ($Time_c$).

Various concentration of DBS ranging from 30 ppm to 2000 ppm were compounded with an ethylene butene-1 copolymer, 2 MI 0.918 density designated as (2) using a small Brabender at 150°C and analyzed via the DSC crystallization time technique. In addition, various concentrations of DBS ranging from 30 ppm to 2000 ppm with 1400 ppm zinc stearate in the 2 MI 0.918 density ethylene butene-1 copolymer were also studied. The maximum DSC temperature were set at 150°C and 220°C respectively to simulate the effect of higher temperatures on the crystallization time. It was found that when the crystallization time is below 125 seconds at 116°C crystallization temperature, clear compression molded plaque will be produced if the compression molding temperature equals the maximum DSC temperature.

As indicated in Table VII temperature has a dramatic effect on the effectiveness of DBS. At higher temperatures, higher concentrations of DBS are required. However, with the addition of zinc stearate lower levels of DBS can be used to generate improved clarity.

TABLE VII

| Example | Composition | DBS CRITICAL CONCENTRATION (PPM) AT: 150°C | 220°C |
|---|---|---|---|
| C33 | Low density PE resin + DBS | 950 | 2000 |
| E21 | Low density PE resin + DBS + 1400 ppm zinc stearate | 750 | 1400 |

Controls 34 to 57

An ethylene-butene-1, 2 MI, density 0.918 gm/cm$^3$ copolymer prepared as described above and designated (2) was compounded using a small Brabender mixer with dibenzylidene sorbitol (DBS) and co-ingredients under a five minute mixing cycle at 150°C and 210°C. All ingredients were simultaneously added and compounded in the 40 gram Brabender. The compounded products were subsequently compression molded into plaques (10 × 10 cm, 0.5 mm; 4" × 4", 20 mils) at 170, 190 and 220°C, respectively. The following formulations were investigated: ethylene-butene-1 copolymer plus 1400 ppm dibenzylidene sorbitol; ethylene-butene-1 copolymer plus 1400 ppm dibenzylidene sorbitol plus 1400 ppm magnesium stearate; ethylene-butene-1 copolymer plus 1400 ppm dibenzylidene sorbitol plus 1400 ppm calcium stearate; ethylene-butene-1 copolymer plus 1400 ppm DBS plus 1400 ppm aluminum stearate. The appearance and the haze of the plaques were recorded. The data is summarized in Table VIII.

As indicated in Table VIII, Controls 34 to 39 (1400 ppm DBS) and Controls 52 to 57 (1400 ppm DBS and 1400 ppm aluminum stearate) did not improve the haze of compression molded plaques under any mixing and molding conditions. The introduction of 1400 ppm magnesium stearate (Controls 40 to 45) or 1400 ppm calcium stearate (Controls 46 to 51) generated an improvement in haze. However, at equal ppm concentration, zinc stearate (Table I) is more effective in improving the optical properties of said ethylene-butene-1 copolymer containing 1400 ppm DBS than either magnesium stearate, calcium stearate, or aluminum stearate.

TABLE VIII

| Controls | Composition | $T_{Mix}$ (°C)(1) | $T_{Mold}$ (°C)(2) | Appearance(3) | Haze (%)(3) |
|---|---|---|---|---|---|
| C34 | Low density PE resin | 150 | 170 | hazy | 69.3 |
| C35 | & 1400 ppm DBS | " | 190 | hazy | 71.3 |
| C36 | | " | 220 | hazy | 71.4 |
| C37 | | 210 | 170 | hazy | 69.1 |
| C38 | | " | 190 | hazy | 71.0 |
| C39 | ↓ | " | 220 | hazy | 71.1 |
| C40 | Low density PE resin | 150 | 170 | hazy | 59.1 |
| C41 | & 1400 ppm DBS | " | 190 | partial haze | 54.2 |
| C42 | & 1400 ppm Magnesium | " | 220 | partial haze | 37.3 |
| C43 | stearate | 210 | 170 | partial haze | 48.4 |
| C44 | | " | 190 | partial haze | 46.9 |
| C45 | ↓ | " | 220 | partial haze | 42.6 |
| C46 | Low density PE resin | 150 | 170 | hazy | 51.8 |
| C47 | & 1400 ppm DBS | " | 190 | partial haze | 56.0 |
| C48 | & 1400 ppm Calcium | " | 220 | partial haze | 42.1 |
| C49 | stearate | 210 | 170 | partial haze | 45.3 |
| C50 | | " | 190 | partial haze | 46.3 |
| C51 | ↓ | " | 220 | partial haze | 52.1 |
| C52 | Low density PE resin | 150 | 170 | hazy | 68.1 |
| C53 | & 1400 ppm DBS | " | 190 | hazy | 69.5 |
| C54 | & 1400 ppm Aluminum | " | 220 | hazy | 70.1 |
| C55 | stearate | 210 | 170 | hazy | 68.5 |
| C56 | | " | 190 | hazy | 70.5 |
| C57 | ↓ | " | 220 | hazy | 70.1 |

(1) Brabender mixing temperatures.
(2) Compression molding plaque temperatures.
(3) Based on 0.5 mm (20 mil) plaques.

**Claims**

1. An ethylene polymer plastic composition having improved optical properties which comprises an ethylene polymer resin and dibenzylidene sorbitol in an amount of from 0.09 to 0.35% by weight, based on the total weight of the composition, characterized in that said ethylene polymer resin has a narrow molecular weight distribution, an ethylene content of ≧85% and a melt flow ratio of ≧22 to ≦40 and that, additionally, zinc stearate is present in amounts of from 0.04 to 0.35% by weight, based on the total weight of the composition.

2. A composition according to claim 1 wherein said ethylene polymer has a melt index of 0.1 to 100 g/10 min, and a density of 0.910 to 0.972.

3. A composition according to claim 1 or 2 wherein the ethylene polymer is a low density ethylene hydrocarbon copolymer, preferably a copolymer of ethylene and at least one $C_3$ to $C_8$ alpha olefin, especially an ethylene-butene-1-copolymer.

4. A composition according to any of the preceding claims wherein dibenzylidene sorbitol is present in said composition in an amount of 0.12 to 0.25% by weight, based on the total weight of the composition, and wherein zinc stearate is present in said composition in an amount of 0.06 to 0.25% by weight, based on the total weight of the composition.

5. A method of maintaining the effectiveness of dibenzylidene sorbitol when it is added to ethylene polymer plastic-forming compositions to enhance the optical properties of ethylene polymer plastic compositions, which comprises incorporating in said plastic-forming compositions containing dibenzylidene sorbitol in an amount of 0.09 to 0.35% by weight, based on the total weight of the composition, zinc stearate in an amount of 0.04 to 0.35% by weight, based on the total weight of the composition.

6. A method according to claim 5 wherein said ethylene polymer has a melt index of 0.1 to 100 g/10 min, and a density of 0.910 to 0.972.

7. A method according to claim 5 or 6 wherein the ethylene polymer is a low density ethylene hydrocarbon copolymer, preferably a copolymer of ethylene and at least one $C_3$ to $C_8$ alpha olefin, especially an ethylene-butene-1-copolymer.

8. A method according to any of the preceding claims 5 to 7 wherein dibenzylidene sorbitol is present in said composition in an amount of 0.12 to 0.25% by weight, based on the total weight of the composition, and wherein zinc stearate is present in said composition in an amount of 0.06 to 0.25% by weight, based on the total weight of the composition.

**Patentansprüche**

1. Ethylen-Polymer-Kunststoffzusammensetzung mit verbesserten optischen Eigenschaften, welche umfaßt ein Ethylenpolymerharz und Dibenzylidensorbit in einer Menge von 0,09 bis 0,35 Gew.-%, bezogen auf das Gesamtgewicht der Zusammensetzung, dadurch gekennzeichnet, daß das Ethylenpolymerharz eine enge Molekulargewichtsverteilung, einen Ethylengehalt von ≧85% und ein Schmelzflußverhältnis von ≧22 bis ≦40 aufweist und daß zusätzlich Zinkstearat in Mengen von 0,04 bis 0,35 Gew.-%, bezogen auf das Gesamtgewicht der Zusammensetzung, anwesend ist.

2. Zusammensetzung nach Anspruch 1, bei welcher das Ethylenpolymere einen Schmelzindex von 0,1 bis 100 g/10 min und eine Dichte von 0,910 bis 0,972 aufweist.

3. Zusammensetzung nach Anspruch 1 oder 2, bei welcher das Ethylenpolymere ein Ethylen-Kohlenwasserstoff-Copolymeres von niedriger Dichte, vorzugsweise ein Copolymeres aus Ethylen und wenigstens einem $C_3$—$C_8$ alpha-Olefin, insbesondere einem Ethylen-Buten-1-Copolymer, ist.

4. Zusammensetzung nach einem der vorangehenden Ansprüche, in welcher Dibenzylidensorbit in der Zusammensetzung in einer Menge von 0,12 bis 0,25 Gew.-%, bezogen auf das Gesamtgewicht der Zusammensetzung, vorhanden ist und in welcher Zinkstearat in der Zusammensetzung in einer Menge von 0,06 bis 0,25 Gew.-%, bezogen auf das Gesamtgewicht der Zusammensetzung, vorhanden ist.

5. Verfahren zur Aufrechterhaltung der Wirksamkeit von Dibenzylidensorbit, wenn dieses zu Ethylenpolymerkunststoffbildenden Zusammensetzungen gegeben wird, um die optischen Eigenschaften von Ethylenpolymer-Kunststoffzusammensetzungen zu verbessern, welches umfaßt die Einverleibung von Zinkstearat in einer Menge von 0,04 bis 0,35 Gew.-% bezogen auf das Gesamtgewicht der Zusammensetzung, in die Kunststoff bildenden Zusammensetzungen, die Dibenzylidensorbit in einer Menge von 0,09 bis 0,35 Gew.-%, bezogen auf das Gesamtgewicht der Zusammensetzung, enthalten.

6. Verfahren nach Anspruch 5, bei welchem das Ethylenpolymere einen Schmelzindex von 0,1 bis 100 g/10 min und eine Dichte von 0,910 bis 0,972 aufweist.

7. Verfahren nach Anspruch 5 oder 6, bei welchem das Ethylenpolymere ein Ethylen-Kohlenwasserstoff-Copolymeres von niedriger Dichte, vorzugsweise ein Copolymeres aus Ethylen und wenigstens einem $C_3$—$C_8$ alpha-Olefin, insbesondere ein Ethylen-Buten-1-Copolymeres, ist.

8. Verfahren nach einem der vorangehenden Ansprüche 5 bis 7, bei welchem Dibenzylidensorbit in der Zusammensetzung in einer Menge von 0,12 bis 0,25 Gew.-%, bezogen auf das Gesamtgewicht der Zusammensetzung, vorhanden ist und in welcher Zinkstearat in der Zusammensetzung in einer Menge von 0,06 bis 0,25 Gew.-%, bezogen auf das Gesamtgewicht der Zusammensetzung, anwesend ist.

**Revendications**

1. Composition de matière plastique à base d'un polymère d'éthylène douée de très bonnes propriétés optiques, qui comprend une résine d'un polymère d'éthylène et du dibenzylidène-sorbitol en une quantité de 0,09 à 0,35% en poids sur la base du poids total de la composition, caractérisée en ce que ladite résine de polymère d'éthylène a une distribution étroite de poids moléculaire, une teneur en éthylène supérieure ou égale à 85%, et un rapport de l'indice d'écoulement à l'indice de fluidité allant d'une valeur supérieure ou égale à 22 à une valeur inférieure ou égale à 40, et en ce que, en outre, du stéarate de zinc est présent en quantités de 0,04 à 0,35% en poids sur la base du poids total de la composition.

2. Composition suivant la revendication 1, dans laquelle ledit polymère d'éthylène a un indice de fluidité de 0,1 à 100 g/10 min, et une masse volumique de 0,910 à 0,972.

3. Composition suivant la revendication 1 ou 2, dans laquelle le polymère d'éthylène est un copolymère d'un hydrocarbure et d'éthylène basse densité, de préférence un copolymère d'éthylène et d'au moins une alpha-oléfine en $C_3$ à $C_8$, notamment un copolymère d'éthylène et de butène-1.

4. Composition suivant l'une quelconque des revendications précédentes, dans laquelle du dibenzylidène-sorbitol est présent en une quantité de 0,12 à 0,25% en poids, sur la base du poids total de la composition, et du stéarate de zinc est présent en une quantité de 0,06 à 0,25% en poids, sur la base du poids total de la composition.

5. Procédé pour entretenir l'efficacité de dibenzylidène-sorbitol lorsqu'il est ajouté à des compositions formant une matière plastique à base d'un polymère d'éthylène pour améliorer les propriétés optiques de compositions de matières plastiques à base d'un polymère d'éthylène, qui consiste à incorporer dans lesdites compositions formant une matière plastique, contenant du dibenzylidène-sorbitol en une quantité de 0,09 à 0,35% en poids sur la base du poids total de la composition, du stéarate de zinc en une quantité de 0,04 à 0,35% en poids sur la base du poids total de la composition.

6. Procédé suivant la revendication 5, dans lequel ledit polymère d'éthylène a un indice de fluidité de 0,1 à 100 g/10 min, et une masse volumique de 0,910 à 0,972.

7. Procédé suivant la revendication 5 ou 6, dans lequel le polymère d'éthylène est un copolymère d'un hydrocarbure et d'éthylène basse densité, de préférence un copolymère d'éthylène et d'au moins une alpha-oléfine en $C_3$ à $C_8$, notamment un copolymère d'éthylène et de butène-1.

8. Procédé suivant l'une quelconque des revendications 5 à 7, dans lequel du dibenzylidène-sorbitol est présent dans ladite composition en une quantité de 0,12 à 0,25% en poids sur la base du poids total de la composition, et du stéarate de zinc est présent dans ladite composition en une quantité de 0,06 à 0,25% en poids sur la base du poids total de la composition.